(19) Europäisches Patentamt
European Patent Office
Office européen des brevets

(11) EP 0 437 234 B1

(12) **EUROPEAN PATENT SPECIFICATION**

(45) Date of publication and mention
of the grant of the patent:
**23.04.1997 Bulletin 1997/17**

(51) Int Cl.6: **H04N 9/79**

(21) Application number: **91100172.5**

(22) Date of filing: **07.01.1991**

(54) **Intermittent magnetic recording method and apparatus thereof**

Intermittierendes magnetisches Aufzeichnungsverfahren und Gerät dafür

Méthode d'enregistrement magnétique intermittent et dispositif correspondant

(84) Designated Contracting States:
**DE FR GB**

(30) Priority: **10.01.1990 JP 2866/90**

(43) Date of publication of application:
**17.07.1991 Bulletin 1991/29**

(73) Proprietor: **MITSUBISHI DENKI KABUSHIKI KAISHA**
**Chiyoda-ku Tokyo (JP)**

(72) Inventors:
• **Shimoi, Hiroshi**
**1, Babazusho, Nagaokakyo-shi, Kyoto (JP)**
• **Inadomi, Takafumi, c/o Suntec Corporation Ltd.**
**Amagasaki-shi, Hyogo (JP)**

(74) Representative: **Pfenning, Meinig & Partner**
**Mozartstrasse 17**
**80336 München (DE)**

(56) References cited:
EP-A- 0 176 257            FR-A- 1 407 621
FR-A- 2 354 674            US-A- 4 774 599

**Description**

BACKGROUND OF THE INVENTION

Field of the Invention:

The present invention relates to a method and an apparatus for an intermittent magnetic recording by which a video signal is intermittently recorded on a magnetic tape.

Description of the Related Arts:

As one method for recording a video signal on a magnetic tape, an intermittent magnetic recording method is widely known. This intermittent magnetic recording method is to effect a long-hour recording on the magnetic tape employing a picture (frame) skip recording technique.

In the intermittent magnetic recording method, a drive instruction signal is issued at every given period T. This signal is to supply the magnetic tape forwardly for a predetermined length. The periodical issue of this drive instruction signal at every given period T causes the tape supply to recur.

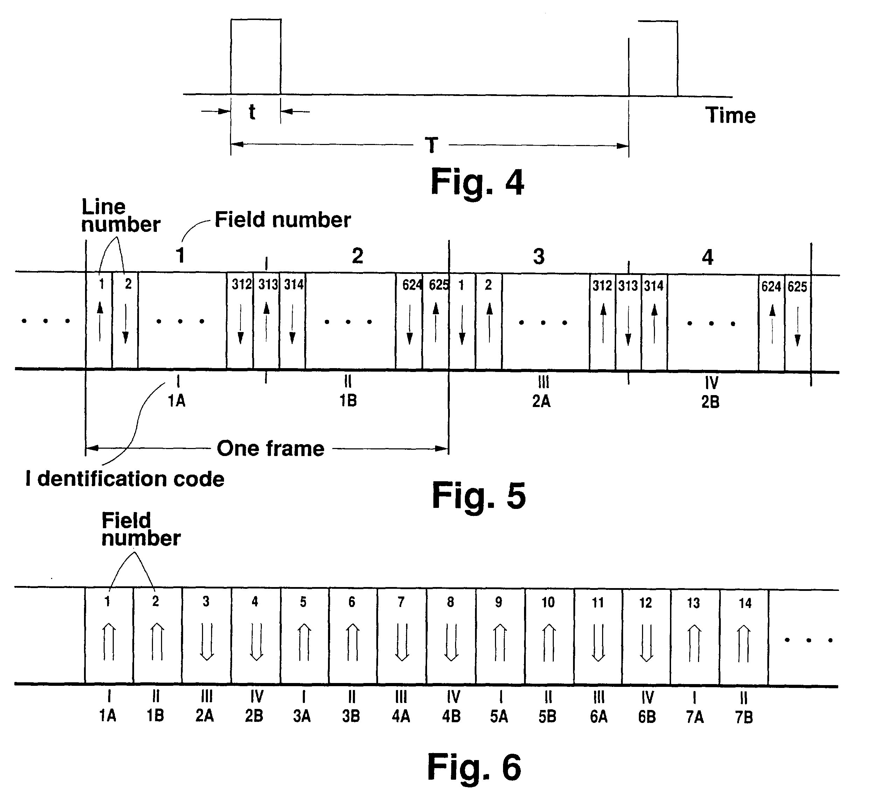

In practice, the video signal of one field is only recorded on the magnetic tape during the period T (hereinafter referred to "recording interval T") for generating the driving instruction signal. Assuming that a duration necessary for this recording, that is, the recording time of one field is "t", a recording multiplying factor can be defined as T/t. A correlation between the recording interval T and the one-field recording time of one field "t", i.e., a record timing, is expressed as shown in Fig. 4.

The multiplying factor T/t is an index representing a ratio of field to be skipped. Provided that the multiplying factor T/t is 8, for example, recording can be made for 24 hours on a magnetic tape for three-hour recording use.

The recording multiplying factor T/t is usually determined to a multiple number of 8 such as 8, 16, 24, and the like. This is because a time available for recording can be defined like 24, 48, 72, etc. when recording is made on the magnetic tape for three-hour recording use. In other words, if the multiplying factor is set to a multiple number of 8, the time available for recording will become a value in accordance with the unit of one day (equivalent to 24 hours).

For instance, in the case of 50 Hz field frequency, a recording time of one field "t" is given by

$$t = 1/50 \text{ (Hz)}$$

$$= 20 \text{ (msec)}.$$

If the recording interval T is set to 160 msec, the recording multiplying factor T/t will be 8, and a 24-hour recording will be realized by the use of the magnetic tape for 3-hour recording.

In principle, a video signal is generated in accordance with one of the three primary standards such as NTSC, PAL, and SECAM. The NTSC standard employs a field frequency of 60 Hz, a frame frequency of 30 Hz, and 525 horizontal scanning lines (line number). On the contrary, the PAL and SECAM standards employ a field frequency of 50 Hz, a frame frequency of 25 Hz, and 625 line numbers. Shortly, both the PAL and the SECAM systems are identical with respect to the frame, field and line number. Further, these two standards have a common in that a phase and/or a frequency of a burst signal is periodically switched between two predetermined values every one line at a two-line period. However, these two standards are different in that, in accordance with the PAL system, the phase of the burst signal is alternately reversed between 135 degree and -135 degree as compared with a color subcarrier, whereas, in accordance with the SECAM standard, the burst signal is frequency-modulated by a carrier wave, the frequency of which is switched every one line.

Conventionally, an intermittent magnetic recording apparatus which meets the PAL/SECAM standards has already been introduced in the market. The recording multiplying factor T/t of this apparatus is set to the multiple number of 8 for reasons of the above.

However, in case the recording multiplying factor T/t is set to the multiple number of 8, several disadvantages such as a color disappearance or the like occur. These disadvantages are due to that the correlation of the burst phase, or of the carrier frequency, between the fields to be recorded adjacently on the magnetic tape is different between at intermittent recording and at normal recording that successively records the video signal without performing the intermittent recording.

Figs. 5 and 6 show the correlation of the frame, field, and line in accordance with the PAL and the SECAM standards, respectively.

As seen from these figures, one frame consists of two fields. As one frame includes 625 lines, one field comprises 625/2 lines. A first frame "1" consists of a field 1A and a field 1B wherein a numeral "1" denotes a frame number, for example, and the field 1A includes lines from a first line to a 312.5th line.

As mentioned above, in the PAL/SECAM standards, the burst phase or the carrier frequency is periodically inverted or switched every one line. In Fig. 5, inside of each rectangular which corresponds to each line, the state of the burst phase or the carrier frequency is indicated by an arrow. For example, in the PAL standards, an arrow directing upward denotes a state in which the burst phase is 135 degree.

Meanwhile, symbols in both Figs. 5 and 6 such as I, II, III, or IV, are an identification code. These symbols are assigned to each field with a consideration of the burst phase or the carrier frequency. For instance, it will be understood that a first field of the identification code I is different from a third field of the identification code III in respect of the initial state of the burst phase or the carrier frequency of the first line, i.e., a burst phase correlation or a carrier frequency correlation. The identification code is the symbol that represents the characteristic of each field. That is to say, with regard to the burst phase or the carrier frequency, the first field with the code I and the second field with the code II, and the third field with the code III and the fourth field with the code IV respectively have the same correlation therebetween.

The regularity shown in the drawings controls the operation of a phase discriminating circuit of the PAL standard. That is, when the burst phase correlation of the video signal of the PAL standard is deteriorated, the phase discriminating circuit cannot perform an expected operation. With this result, a so-called color disappearance or a hue distortion is observed on a playback screen. Moreover, unless the successiveness of the lines to be recorded adjacently is maintained, an excessive line sweep will occur.

In the case of the intermittent magnetic recording for recording a field extracted at a given period in accordance with a necessary recording multiplying factor T/t, the burst phase correlation or the carrier frequency correlation is generally different from that at successive recording. The burst phase correlation or the carrier frequency correlation cannot effect an expected operation of the phase identification circuit of the PAL standard.

These disadvantages may differ according as how the necessary recording multiplying factor T/t is determined.

The recording multiplying factor T/t employed in the intermittent magnetic recording method which meets the PAL/SECAM standards is the multiple number of 8. Each of the multiple number of 8 is a number which belongs to the group of 4N + 4 (N = 1, 2, 3, ...).

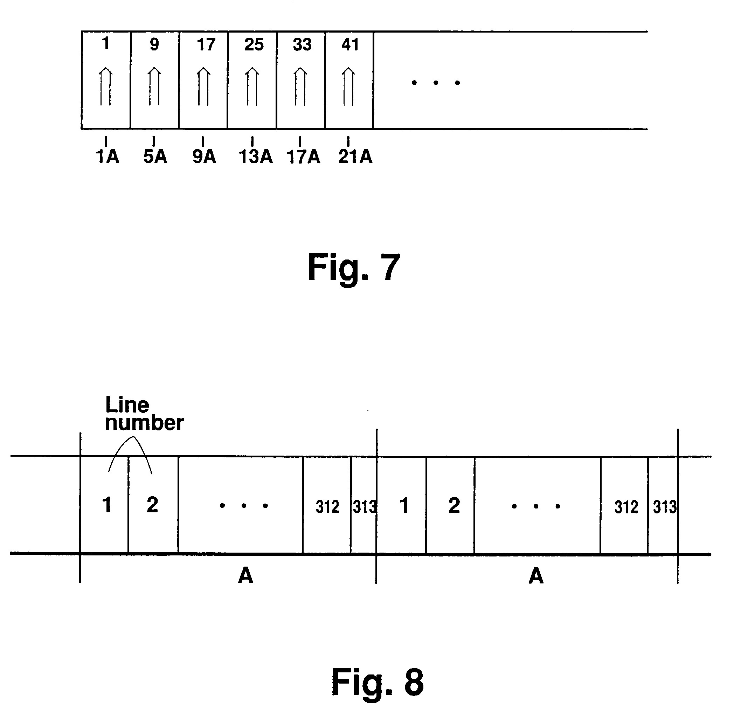

When the recording multiplying factor T/t is set to 4N + 4, the burst phase correlation or the carrier frequency correlation will become as shown in Fig. 7. What is illustrated in Fig. 7 is the correlation obtained in the case of N = 1. On this point, however, even in the case of N > 2, the similar correlation is established.

When the recording multiplying factor T/t is set to 4 x 1 + 4 = 8, a video signal is recorded on the tape in the order of a 1st field, a 9th field, and a 17th field... All of these fields are indicated in the identification code I.

Therefore, the correlation of the lines between the fields to be recorded adjacently become discontinued, and such state is shown in Fig. 8. More specifically, a 0,5 line of the 313th line is recorded. As a result, the line interval is deteriorated, and causes an exessive line sweep of the horizontal synchronization when playing back. In addition, in such an apparatus as records one frameby the use of two heads alternately at an interval in the successive recording, only one head of the two is used for one field, whereas the remaining head is used for another field at the of intermittent recording.

Thus, in the above conventional intermittent magnetic recording, there occur several disadvantages such as color disappearance, hue distortion or exessive line sweep.

EP-A-0 176 257 discloses a magnetic recording apparatus for intermittently recording a video signal, wherein a magnetic tape is intermittently driven for one frame period at intervals of a predetermined odd number of frames so that a video signal applied from an input terminal is intermittently recorded. It is pointed out that the use of an odd number of frames ensures that the colour burst signals in succeeding recorded frames are in the normal relation to each other, so as to avoid possible colour disappereance. Further, FR-A-1 407 621 describes a method for recording and reproducing video signals in a magnetic tape apparatus, wherein only each n-th frame or field is recorded and each frame or field recorded is reproduced n times. Especially each third frame or field is recorded and each frame or field recorded is reproduced three times.

**Summary of the invention**

The object of the present inventionis to provide a method and an apparatus capable of solving the above-mentioned unwanted phenomena and properly playing back a recorded video signal without causing the color disappereance, hue distortion, or exessive line sweep, or the like. This object is solved with an intermittent magnetic recording method having the features of claim 1 and with an intermittent magnetic recording apparatus having the features of claim 4.

According to the present invention, there is provided an intermittent magnetic recording method which is capable of recording part of a video signal on a magnetic tape by extracting fields from the video signal, a burst signal of which, respectivelly, changes between two consecutive lines such that if a field ends with a half line, the next field starts with a half line having the same burst state as the last half line of the previous field, and if a field ends with a whole line having a burst state different from that in the least line of the previous field, resulting in a field cycle of "n" fields, wherein "n" is an integer of 2 or more, which method is characterized in that adjacently recorded fields are extracted at an interval of nN+1 fields of the video signal, where N is an integer of one ore more, such that if a record field ends with a half line, the next recorded field starts with a half line having the same burst state as the last half line of the precious recorded field, and if a recorded field ends with a whole line, the next recorded field starts with a whole line having a burst state different from that in the last line of the previous recorded field.

Thus, if one field is extracted at the field cycle of nN+1, a phase and/or a frequency of the field to be recorded adjacently will be inverted in the same order as that at successive recording. This periodical switching of the phase and/or the frequency is due to the following reasons. When such field extraction is carried out, the number of fields originally existing between the fields to be recorded adjacently is nN. The duration of the nN fields includes N periodes (n fields) in which period the phase and/or the frequency is switched. Accordingly, if the phase and/or the frequency of the field recorded at some point belongs to the first phase and/or the frequency group, a next field to be recorded will have a phase and/or a frequency after the first group.

With this result the unwanted phenomena in accordance with the conventional method, due to the insuccessive switching of the phase and/or the frequency at the playback will never occur.

The present invention is applicable to such standards of the video signals as PAL and SECAM. When a video signal which meets the PAL standard is recorded by means of the intermittent magnetic recording technique, the aforementioned parameter "n" is 4. As a result, the drawbacks of the conventional method will be prevented, that is, the color disappearance, hue distortion, and excessive line sweep, etc. The same parameter and similar consequent result apply to a video aignal of the SECAM standard to be recorded by the intermittent magnetic recording technique.

In practice, the frequency-extraction of one field which is executed at the field cycle of nN+1 is attained by the following steps.

First, a video signal is separated from a vertical synchronization signal. This vertical synchronization signal (hereinafter called as v-sync signal) is included in order to secure the vertical synchronization of a screen, and it is possible to deem that the video signal of one field is supplied each time one v-sync signal is counted.

Next, this v-sync signal is then counte up to the number of nN+1. This step is a feature of the present invention, that is, a step of setting a recording multiplying factor.

Thereafter, the video signal of one field is extracted after this counting operation is completed.

Thus, the intermittent magnetic recording of the present invention is achieved with simple steps.

In other words, the present invention can be realized with the economical method.

Further, the object of the invention is solved with an intermittent magnetic recording apparatus comprising.

a recording means for recording part of a video signal on a magnetic tape, a burst signal of the video signal, respectively, changes between two consecutive lines such that if a field ends with a half line, the next field starts with a half line having the same burst state as the last half line of the previous field, and if a field ends with a whole line, the next field starts with a whole line having a burst state different from that in the last line of the previous field, resulting in a field cycle of "n" fields, wherein "n" is an integer of 2 or more, a separating means for separating a vertical synchronization signal from the video signal,
and
a recording control means which apparatus is characterized in that the recording control means is adapted to effect the recording of one field on the magnetic tape each time vertical synchronization signals in the number of nN+1 have arrived, where N is an integer of 1 or more, such that if a recorded field ends with a half line, the next recorded field starts with a half line having the same burst state as the last half line of the precious recorded field, and if a recorded field ends with a whole line, the next recorded field starts with a whole line having a burst state different from that in the last line of the previous recorded field.

Further, it goes without saying that this apparatus is applicable for the video signal that meets either the PAL standard or the SECAM standard.

For the structural components of this apparatus, the recording means includes, for example, a rotating drum and a rotating magnetic head. The rotating drum rotates at a given frequency in synchronization with the v-sync signal, and the rotating magnetic head records the video signal on the tape scanning the tape surface.

In addition, the recording control means further includes a counter, a driving instruction means and a record timing control means. The counter counts the number of the v-sync signals. The driving instruction means issues a drive instruction signal when the accumulated count reaches the number of nN + 1, namely, the counter completes its count. And the recording timing control means supplies the video signal of one field toward the recording means in accordance with the drive instruction signal.

Here, the drive instruction means may be composed of an RS flip-flop and the recording timing control means can also be formed in a switch, and being possible to simplify the structure of the apparatus.

The foregoing and other objects, features and advantages of the invention will be apparent from the following more particular description of preferred embodiments of the invention, as illustrated in the accompanying drawings.

BRIEF DESCRIPTION OF THE DRAWINGS

Fig. 1 is view for explaining an intermittent magnetic recording method in accordance with one embodiment of the present invention and for illustrating contents of a setting of a recording multiplying factor;

Fig. 2 is a block diagram for illustrating the structure of the intermittent magnetic recording apparatus which operates in accordance with the method shown in Fig. 1;

Fig. 3 is a timing chart illustrating an operation timing of the apparatus shown in Fig. 2;

Fig. 4 is a view for illustrating the concept of the recording multiplying factor;

Fig. 5 is a view for illustrating a correlation of a frame, a field, a line of PAL/SECAM standards;

Fig. 6 is a view for illustrating the correlation compressed in the direction of time axis;

Fig. 7 is a view for explaining unwanted phenomena with the conventional intermittent magnetic recording method of the PAL/SECAM standards, and more particularly, the discontinued correlation of a burst phase or a carrier frequency; and

Fig. 8 is a view for explaining unwanted phenomena with the conventional intermittent magnetic recording method of the PAL/SECAM standards, and more particularly a discontinuity of the line.

## DETAILED DESCRIPTION OF THE EMBODIMENTS

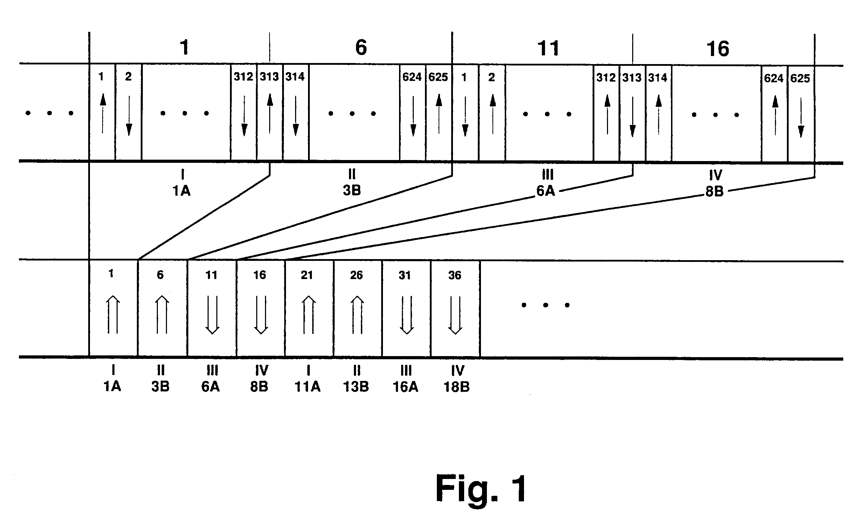

In Fig. 1, there is disclosed an intermittent magnetic recording method in accordance with one embodiment of the present invention, and more particularly a correlation of a burst phase or a carrier frequency when a recording multiplying factor T/t is set to 5. For simplifying the description, there will be described the intermittent magnetic recording of the video signal which meets the PAL standard, and by merely replacing the "burst phase" into a "carrier frequency" in the explanation hereinbelow, the same description will apply to the recording of the signal which meets SECAM standard. Moreover, the multiplying factor T/t is not limited to 5, and the same explanation will be applied even if the multiplying factor is set to 4N + 1, where N is an integer of 1 or more. Moreover, it may be possible that the multiplying factor T/t is not constant at one recording time. Namely, the recording density may be a combination of numbers which belong to a set of 4N + 1. For instance, it may be possible to set the recording multiplying factor to a combination of numbers, which belong to the set of 4N + 1, such as 5 at one field, 9 at a next field, and 13 at a field after next.

As shown in Fig. 1, in accordance with the present invention, one field is extracted and recorded at an interval of 5 fields in the order of 1, 6, 11, 16, and so forth. If the order of recording is expressed by the order of the identification code, they will be I, II, III, IV, ... That is, the intermittent magnetic recording is performed with the same burst phase correlation as that at the successive recording.

As a result, unwanted phenomena such as color disappearance, hue distortion are prevented. In addition, since the successiveness of the line is maintained, the excessive line sweep will be eliminated.

The burst phase correlation that produces the above-mentioned is obtained by setting a field cycle for extraction, namely, setting the recording multiplying factor T/t.

When the recording multiplying factor T/t is set to either 4N + 2 or 4N + 4, the order of the identification codes will be a cyclic repetition of such a pair of symbols as I, III , I, III ... In addition, the successiveness of the line will not be maintained.

In addition, when the recording multiplying factor T/t is set to 4N + 3, the order of the symbols will be IV, III, II, I...

Therefore, the only multiplying factor T/t that can realize the burst correlation the same as that at the successive recording and maintain the successiveness of the line is 4N + 1.

With this method, if the intermittent magnetic recording is made on a magnetic tape for three-hour recording use, it is possible to record the video signal for 15 hours which is obtained by a product of 3 and 5.

Still another advantage in accordance with the present invention is in that the recording multiplying factor T/t can be set to a number belonging to a multiple number of 8 with 1. Specifically, compared to the conventional art in which recording is made on a three-hour recording tape in the unit of one day, the present invention makes it possible to realize a 27-hour recording with the three-hour recording tape. This additional three hours will never cause any inconvenience to the usability.

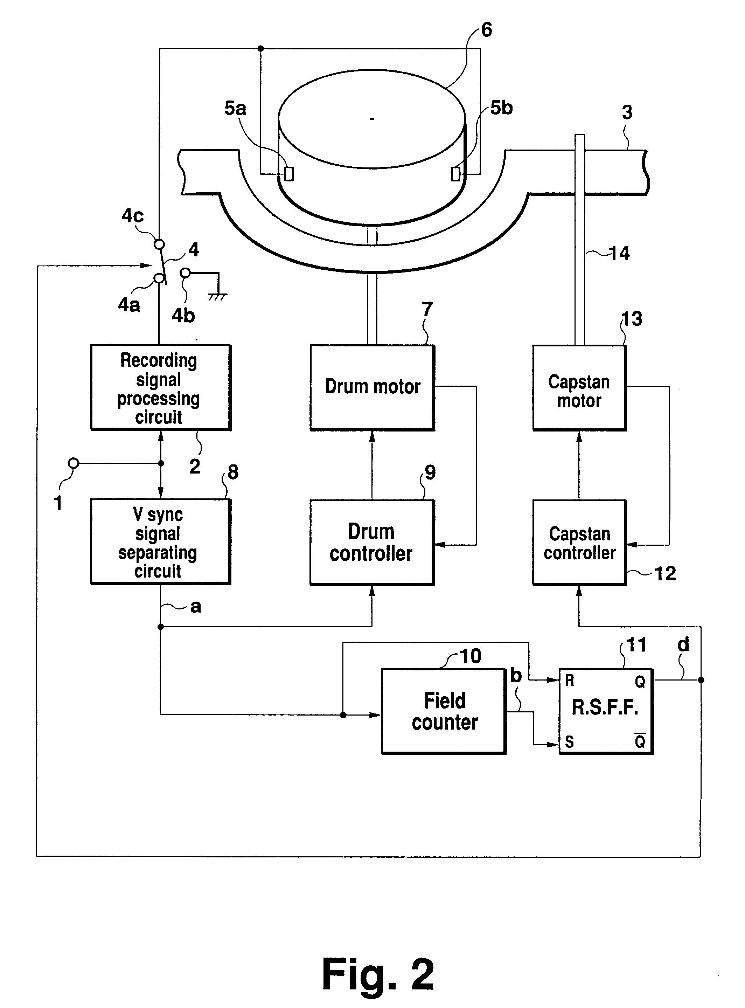

Fig. 2 shows an apparatus of performing the intermittent magnetic recording method for a PAL signal show in Fig. 1. At an input terminal 1, the PAL signal is applied. This input terminal 1 is connected to a recording signal processing circuit 2. The processing circuit 2 is provided for converting an input video signal into a signal possible to be recorded on a magnetic tape 3, and this circuit 2 further comprises non-illustrated circuits such as a pre-emphasis circuit, an FM modulation circuit, a recording equalizer, and an amplifier, and the like.

An output from the recording signal processing circuit 2 is delivered to both of magnetic heads 5a, 5b by way of a changeover switch 4. The switch 4 further comprises three terminals, that is, 4a, 4b, and 4c, and the switch 4 is designed in such a manner that the terminal 4c is switched and connected to either the 4a or the 4b. The terminal 4a is connected to the recording signal processing circuit 2, whereas the terminal 4b is grounded. At the terminal 4c, both the magnetic heads 5a and 5b are connected, and these heads are located to a predetermined position on the rotating drum 6. The rotating drum 6 is linked with a drum motor 7, and is driven by the same.

The foregoing input terminal 1 is also connected to a vertical synchronization signal separation circuit 8, which extracts a vertical synchronization signal (50 Hz) exclusively from the video signal and outputs the extracted signal. The output of the v-sync signal separation circuit 8, that is, a v-sync signal "a" is transferred to a drum controller 9, a field counter 10, and a reset terminal of an RS flip-flop 11.

At the drum controller 9, a signal of rotating velocity and angle of rotation detected from the drum motor 7 is inputted. The drum controller 9 performs a servo-control of the rotation of the drum motor 7 in such a manner that the v-sync signal from the drum motor 7 synchronizes with the detection signal from the drum motor 7. On the other hand, the field counter 10 counts a pulse included in the sync signal from the v-sync signal separation circuit 8, and is formed in such a manner that values are accumulated each time the pulse is counted and the counter is again reset to 0 whenever the accumulated values reach predetermined count value. Furthermore, when the field counter 10 counts up to the predetermined value, a count-up signal "b" is issued.

This count-up signal "b" is then delivered to a set terminal of the RS flip-flop 11. An output "d" from the Q terminal of the RS flip-flop 11 is not only transferred to a capstan controller 12 as a capstan drive instruction signal but also transferred to the changeover switch 4 as a switch control signal. Upon receipt of the capstan drive instruction signal d, the capstan controller 12 accepts the detection signal of rotating velocity and rotation angle detected from the capstan motor 13, and performs a servo-control of the capstan motor 13 in response to this signal. The capstan motor 13 is linked with a capstan 14. Consequently, the capstan 14 is rotationally driven by the capstan motor 13 and applies a driving force to the magnetic tape 3.

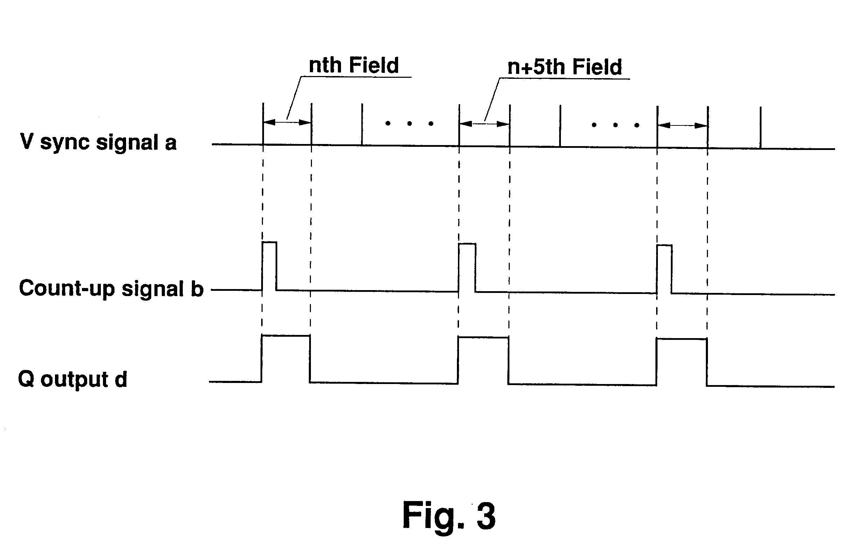

Fig. 3 shows waveforms of signals at points shown in Fig. 2. In Fig. 3, there are illustrated waveforms of the v-sync signal "a" output from the v-sync signal circuit 8, the count-up signal "b" output from the field counter 10, and the output "d" from the Q terminal of the flip-flop 11.

A recording operation by the apparatus shown in Fig. 2, namely, an intermittent magnetic recording operation having the recording multiplying factor T/t = 4N + 1 will now be described hereunder with reference to Fig. 3.

First, when the video signal is input from the input terminal 1, the v-sync signal "a" as shown in Fig. 3 is extracted by the v-sync signal separation circuit 8. This v-sync signal "a" is applied to the field counter 10, and the number of pulses of the signal "a" is counted. As mentioned before, when the field counter 10 counts each pulse and the accumulated count value reaches a predetermined value, the counter 10 issues the count-up signal "b" shown in Fig. 3. Now, in an nth field, assuming that the count-up signal "b" is output from the field counter 10, the RS flip-flop 11 is set at the leading edge of the count-up signal "b". Therefore, the output "d" from the Q terminal of the RS flip-flop 11 will become high as shown in Fig. 3. In response to the high level output, the capstan controller 12 starts to drive the capstan motor 13, and then the capstan motor 14 is driven. With this result, the tape 3 travels around the rotating drum 6.

Meanwhile, the output "d" from the Q terminal of the RS flip-flop 11 is also supplied to the changeover switch 4 as a switch control signal. This changeover switch 4 switches so as to connect between the terminals 4c and 4b when the output "d" is low, and to connect between the terminal 4c and 4a when the output "d" is high. Accordingly, in the sate the output "d" is high, the video signal processed by the recording signal processing circuit 2 is supplied to both the magnetic heads 5a and 5b. Consequently, the video signal of the nth field is recorded on the magnetic tape 3 which is traveling around the rotating drum 6.

After the nth field comes to an end and when the v-synch signal "a" rises as shown in Fig. 3, the RS flip-flop 11 is reset. With this result, the output "d" from the Q terminal of the RS flip-flop becomes low. In response to this low output the capstan controller 12 causes the capstan motor 13 to stop. In consequence, the magnetic tape 3 halts its travel. In other words, the tape 3 travels only during the period of the nth field, and the video signal of the nth field is merely recorded on the tape 3. Besides, in response to the output "d" from the Q terminal of the RS flip-flop 11, the changeover switch 4 is turned to the side of the terminal 4b, and the supply of the video signal to the magnetic heads 5a and 5c is stopped.

Thereafter, the field counter 10 is reset by the v-sync signal "a" of the nth field, and then restarts a counting operation from a v-sync signal "a" which corresponds to a next field. Then the field counter 10 will not produce an output of the count-up signal until five pulses, i.e., a v-sync signal "a" in the number of n + 5th is counted. Consequently, the RS flip-flop has not been reset between the n + 1th field and the n + 5th field, and the magnetic tape 3 has been stopped.

When the v-sync signal "a" of the n + 5th field rises, the field counter 10 starts a counting operation and produces an output of the count-up signal "b" shown in Fig. 3. Thereby, the RS flip-flop is reset in response to this count-up signal "b", and the driving of the capstan motor 13 is started by the capstan controller 12.

In consequence, the magnetic tape 3 starts traveling. Concurrently, the changeover switch 4 is turned to the side of the terminal 4a, and the video signal from the recording signal processing circuit 2 is supplied to the magnetic heads 5a and 5b. Thereby the video signal of the n + 5th field is recorded on the magnetic tape 3.

Meanwhile, since the magnetic tape 3 has been suspended between the n + 1th field and the n + 5th field, the video signal of the n + 5th field is recorded on the field adjacent to the field 1 at which the video signal of the nth field is recorded.

When the v-sync signal "a" rises as shown in Fig. 3 after the n + 5th field comes to an end, the RS flip-flop 11 is reset, and the traveling of the tape 3 is stopped. The magnetic tape 3 travels only the during of the n + 5th field, and the video signal of the n + 5th field is merely recorded on the tape 3.

Following the above-mentioned operations, a series of the same operations are repeated, and the video signal is intermittently recorded at every 5 fields. Specifically, the video signal is recorded with the intermittent recording multiplying factor of 5.

Like the aforementioned embodiment, when the PAL signal is recorded with the intermittent recording medium having the multiplying factor of 5, the video signal on the tape 3 is arranged in the order of the field numbers such as I-II-III-IV as shown in Fig. 1 and the burst phase of the lines with odd numbers are inverted at every frame. Accordingly, it becomes possible to produce a proper playback screen without color disappearance, hue distortion, and excessive line sweep when playing back the video signal.

## Claims

1. An intermittent magnetic recording method which is capable of recording part of a video signal on a magnetic tape (3) by extracting fields from the video signal, a burst signal of which,
respectively, changes between two consecutive lines such that if a field ends with a half line, the next field starts with a half line having the same burst state as the last half line of the previous field, and if a field ends with a whole line, the next field starts with a whole line having a burst state different from that in the last line of the previous field, resulting in a field cycle of "n" fields, wherein "n" is an integer of 2 or more,
**characterized** in that
adjacently recorded fields are extracted at an interval of nN+1 fields of the video signal, where N is an integer of 1 or more, such that if a recorded field ends with a half line, the next recorded field starts with a half line having the same burst state as the last half line of the precious recorded field, and if a recorded field ends with a whole line, the next recorded field starts with a whole line having a burst state different from that in the last line of the previous recorded field.

2. An intermittent magnetic recording method according to claim 1,
**characterized** in that
a standard of the video signal is PAL or SECAM standard, and said field cycle "n" thereof is 4.

3. An intermittent magnetic recording method according to claim 2,
**characterized** in that
said method further comprising the steps of:

    (a) separating a vertical synchronization signal from the video signal;
    (b) counting said vertical synchronization signal up to the number of nN + 1; and
    (c) extracting the video signal of one field after said counting operation is completed.

4. An intermittent magnetic recording apparatus comprising

a recording means (2,5a,5b,6) for recording part of a video signal on a magnetic tape (3), a burst signal of the video signal, respectively, changes between two consecutive lines such that if a field ends with a half line, the next field starts with a half line having the same burst state as the last half line of the previous field, and if a field ends with a whole line, the next field starts with a whole line having a burst state different from that in the last line of the previous field, resulting in a field cycle of "n" fields, wherein "n" is an integer of 2 or more,
a separating means (8) for separating a vertical synchronization signal from the video signal,

and
a recording control means (10,11),
**characterized** in that
the recording control means (4,10,11,12) is adapted to effect the recording of one field on the magnetic tape (3) each time vertical synchronization signals in the number of nN+1 have arrived, where N is an integer of 1 or more, such that if a recorded field ends with a half line, the next recorded field starts with a half line having the same burst state as the last half line of the previouly recorded field, and if a recorded field ends with a whole line, the next recorded field starts with a whole line having a burst state different from that in the last line of the previously recorded field.

5. An intermittent magnet recording apparatus according to claim 4,
**characterized** in that
a standard of the video signal is PAL or SECAM standard, and said field cycle n thereof is 4.

6. An intermittent magnetic recording apparatus according to claim 4 or 5,
**characterized** by

    (a) a rotating drum (6) for rotating at a given frequency in synchronization with said vertical synchronization signal; and
    (b) a rotating magnetic head (5a, 5b) for recording the video signal by scanning on the surface of the magnetic tape (3) positioned on the periphery of said rotating drum (6).

7. An intermittent magnetic recording apparatus according to one of claims 4 to 6,
**characterized** in that
said recording control means comprising:

    (a) a counter (10) for counting the number of said vertical synchronization signals;
    (b) a drive instruction means (11) for issuing a drive instruction signal when accumulated count values reach the number of nN + 1; and
(c) a recording timing control means (4) for supplying the video signal of one field in accordance with said drive instruction signal.

8. An intermittent magnetic recording apparatus according to claim 7,
**characterized** in that
said drive instruction means is an RS flip-flop (11), and said recording timing control means is a switch (14).

## Patentansprüche

1. Verfahren zum intermittierenden magnetischen Aufzeichnen, welches in der Lage ist, einen Teil eines Videosignals auf einem Magnetband (3) aufzuzeichnen, indem Teilbilder aus dem Videosignal herausgezogen werden, wobei ein Farbsynchronsignal von diesem jeweils zwischen zwei aufeinanderfolgenden Zeilen wechselt, derart, daß, wenn ein Teilbild mit einer Halbzeile endet, das nächste Teilbild mit einer Halbzeile startet, die denselben Zustand des Farbsynchronsignals hat wie die letzte Halbzeile des vorhergehenden Teilbildes, und wenn ein Teilbild mit einer ganzen Zeile endet, das nächste Teilbild mit einer ganzen Zeile startet, die einen von dem in der letzten Zeile des vorhergehenden Teilbildes unterschiedlichen Zustand des Farbsynchronsignals hat, wodurch sich ein Teilbildzyklus von "n" Teilbildern ergibt, wobei "n" eine ganze Zahl gleich 2 oder mehr ist,
**dadurch gekennzeichnet**,
daß benachbart aufgezeichnete Teilbilder mit einem Abstand von nN+1 Teilbildern des Videosignals herausgezogen werden, wobei N eine ganze Zahl gleich 1 oder mehr ist, derart, daß, wenn ein aufgezeichnetes Teilbild mit einer Halbzeile endet, das nächste aufgezeichnete Teilbild mit einer Halbzeile startet, die denselben Zustand des Farbsynchronsignals hat wie die letzte Halbzeile des vorher aufgezeichneten Teilbildes, und wenn ein aufgezeichnetes Teilbild mit einer ganzen Zeile endet, das nächste aufgezeichnete Teilbild mit einer ganzen Zeile startet, welche einen Zustand des Farbsynchronsignals aufweist, der gegenüber dem in der letzten Zeile des zuvor aufgezeichneten Teilbildes unterschiedlich ist.

2. Verfahren zum intermittierenden magnetischen Aufzeichnen nach Anspruch 1, dadurch gekennzeichnet, daß ein Standard des Videosignals der PAL- oder SECAM-Standard ist, und daß der Teilbildzyklus "n" hiervon gleich 4 ist.

3. Verfahren zum intermittierenden magnetischen Aufzeichnen nach Anspruch 2, dadurch gekennzeichnet, daß das Verfahren weiterhin die Schritte aufweist:

(a) Trennen eines vertikalen Synchronisationssignals vom Videosignal;
(b) Zählen des vertikalen Synchronisationssignals bis zur Zahl nN + 1; und
(c) Herausziehen des Videosignals eines Teilbildes, nachdem der Zählvorgang beendet ist.

4. Gerät zum intermittierenden magnetischen Aufzeichnen mit

einer Aufzeichnungsvorrichtung (2,5a,5b,6) zum Aufzeichnen eines Teils eines Videosignals auf einem Magnetband (3), wobei ein Farbsynchronsignal des Videosignals jeweils zwischen zwei aufeinanderfolgenden Zeilen wechselt, so daß, wenn ein Teilbild mit einer Halbzeile endet, das nächste Teilbild mit einer Halbzeile startet, die denselben Zustand des Farbsynchronsignals wie die letzte Halbzeile des vorhergehenden Teilbildes, und wenn ein Teilbild mit einer ganzen Zeile endet, das nächste Teilbild mit einer ganzen Zeile startet, die einen von dem in der letzten Zeile des vorhergehenden Teilbildes unterschiedlichen Zustand des Farbsychronsignals hat, wodurch sich ein Teilbildzyklus von "n" Teilbildern ergibt, wobei "n" eine ganze Zahl gleich 2 oder mehr ist, einer Trennvorrichtung (8) zum Abtrennen eines Vertikalsynchronisationssignals von dem Videosignal, und
einer Aufzeichnungssteuervorrichtung (10,11),

**dadurch gekennzeichnet**,
daß die Aufzeichnungssteuervorrichtung (4,10,11,12) geeignet ist, die Aufzeichnung eines Teilbildes auf dem Magnetband (3) jedesmal, wenn Vertikalsynchronisationssignale in der Anzahl nN+1 eingetroffen sind, zu bewirken, wobei N eine ganze Zahl gleich 1 oder mehr ist, derart, daß, wenn ein aufgezeichnetes Teilbild mit einer Halbzeile endet, das nächste aufgezeichnete Teilbild mit einer Halbzeile mit demselben Zustand des Farbsynchronsignals wie die letzte Halbzeile des zuvor aufgezeichneten Teilbildes startet, und wenn ein aufgezeichnetes Teilbild mit einer ganzen Zeile endet, das nächste aufgezeichnete Teilbild mit einer ganzen Zeile mit einem Zustand des Farbsynchronsignals der gegenüber dem in der letzten Zeile des zuvor aufgezeichneten Teilbildes unterscheidet, startet.

5. Gerät zum intermittierenden magnetischen Aufzeichnen nach Anspruch 4, dadurch gekennzeichnet, daß ein Standard des Videosignals der PAL- oder SECAM-Standard ist, und daß der Teilbildzyklus hiervon gleich 4 ist.

6. Gerät zum intermittierenden magnetischen Aufzeichnen nach Anspruch 4 oder 5, gekennzeichnet durch

(a) eine rotierende Trommel (6) zum Drehen mit einer gegebenen Frequenz synchron mit dem Vertikalsynchronisationssignal; und
(b) einen rotierenden Magnetkopf (5a,5b) zum Aufzeichnen des Videosignals durch Abtasten der Oberfläche des auf dem Umfang der rotierenden Trommel (6) befindlichen Magnetbandes (3).

7. Gerät zum intermittierenden magnetischen Aufzeichnen nach einem der Ansprüche 4 bis 6, dadurch gekennzeichnet, daß die Aufzeichnungssteuervorrichtung aufweist:

(a) einen Zähler (10) zum Zählen der Anzahl der Vertikalsynchronisationssignale;
(b) eine Antriebsbefehlsvorrichtung (11) zum Ausgeben eines Antriebsbefehlssignals, wenn der aufgelaufene Zählwert die Zahl nN+1 erreicht; und
(c) eine Aufzeichnungszeit-Steuervorrichtung (4) zum Liefern des Videosignals von einem Teilbild entsprechend dem Antriebsbefehlssignal.

8. Gerät zum intermittierenden magnetischen Aufzeichnen nach Anspruch 7, dadurch gekennzeichnet, daß die Antriebsbefehlsvorrichtung ein RS-Flip-Flop (11) und die Aufzeichnungszeit-Steuervorrichtung ein Schalter (14) sind.

**Revendications**

1. Procédé d'enregistrement magnétique intermittent qui est capable d'enregistrer une partie d'un signal vidéo sur une bande magnétique (3) par extraction de trames du signal vidéo, dont un signal de salve, respectivement, est modifié entre deux lignes consécutives, de telle sorte que si une trame se termine avec une demi-ligne, la trame suivante commence avec une demi-ligne ayant le même état de salve que la dernière demi-ligne de la trame précédente, et si une trame se termine avec une ligne entière ayant un état de salve différent de celui de la dernière ligne de la trame précédente, il en résulte un cycle de trame de "n" trames, "n" étant un nombre entier égal à 2 ou davantage, ce procédé étant caractérisé en ce que les trames enregistrées de manière adjacente sont extraites à un intervalle de nN = 1 trames du signal vidéo, N étant un nombre entier égal à un ou davantage, de telle sorte que si une trame d'enregistrement se termine avec une demi-ligne, la trame enregistrée suivante commence avec une demi-ligne ayant le même état de salve que la dernière demi-ligne de la trame enregistrée précédente, et si une trame enregistrée se termine avec une ligne entière, la trame enregistrée suivante commence avec une ligne entière ayant un état de salve différent de celui de la dernière ligne de la trame enregistrée précédente.

2. Procédé selon la revendication 1, caractérisé en ce qu'un standard du signal vidéo est un standard PAL ou SECAM, et ledit cycle de trame "n" de celui-ci est 4.

3. Procédé d'enregistrement magnétique intermittent selon la revendication 2,
caractérisé en ce que
ledit procédé comprend en outre les étapes suivantes:

(a) séparation d'un signal de synchronisation verticale du signal vidéo;
(b) comptage dudit signal de synchronisation verticale jusqu'au nombre de nN + 1; et
(c) extraction du signal vidéo d'une trame après que ladite opération de comptage est terminée.

4. Appareil d'enregistrement magnétique intermittent comprenant

un moyen d'enregistrement (2, 5a, 5b, 6) pour enregistrer une partie d'un signal vidéo sur une bande magnétique, le signal de salve du signal vidéo, respectivement, étant modifié entre deux lignes consécutives de telle sorte que si une trame se termine avec une demi-ligne, la trame suivante commence avec une demi-ligne ayant le même état de salve que la dernière demi-ligne de la trame précédente, et si une trame se termine avec une ligne entière, la trame suivante commence avec une ligne entière ayant un état de salve différent de celui de la dernière ligne de la trame précédente, ce qui conduit à un cycle de trame de "n" trames, "n" étant un nombre entier égal à 2 ou davantage,
un moyen de séparation (8) pour séparer un signal de synchronisation verticale du signal vidéo, et
un moyen (10, 11) de commande d'enregistrement,

caractérisé en ce que le moyen (4, 10, 11, 12) de commande d'enregistrement est apte à effectuer l'enregistrement d'une trame sur la bande magnétique chaque fois que des signaux de synchronisation verticale au nombre de nN + 1 sont arrivés, N étant un nombre entier égal à 1 ou davantage, de telle sorte que si une trame enregistrée se termine avec une demi-ligne, la trame enregistrée suivante commence avec une demi-ligne ayant le même état de salve que la dernière demi-ligne de la trame enregistrée précédente, et si une trame enregistrée se termine avec une ligne entière, la trame enregistrée suivante commence avec une ligne complète ayant un état de salve différent de celui de la dernière ligne de la trame enregistrée précédente.

5. Appareil d'enregistrement magnétique intermittent selon la revendication 4,

caractérisé en ce que le standard du signal vidéo est le standard PAL ou SECAM, et ledit cycle de trame n, de celui-ci, est de 4.

6. Appareil d'enregistrement magnétique intermittent selon la revendication 4 ou 5,

caractérisé par

(a) un cylindre rotatif (6) destiné à tourner à une fréquence donnée en synchronisme avec ledit signal de synchronisation verticale; et
(b) une tête magnétique rotative (5a, 5b) pour enregistrer le signal vidéo par balayage sur la surface de la bande magnétique (3) disposée à la périphérie dudit cylindre rotatif (6).

7. Appareil d'enregistrement magnétique intermittent selon l'une des revendications 4 à 6,

caractérisé en ce que ledit moyen de commande d'enregistrement comprend:

(a) un compteur (10) pour compter le nombre desdits signaux de synchronisation verticale;
(b) un moyen (11) d'instruction d'entraînement pour délivrer un signal d'instruction d'entraînement lorsque les valeurs de compte accumulées atteignent le nombre de $nN + 1$; et
(c) un moyen (4) de commande de synchronisation d'enregistrement pour appliquer le signal vidéo d'une trame en fonction dudit signal d'instruction d'entraînement.

8. Appareil d'enregistrement magnétique intermittent selon la revendication 7,

caractérisé en ce que ledit moyen d'instruction d'entraînement est une bascule RS (11), et ledit moyen de commande de synchronisation d'enregistrement est un commutateur (14).

**Fig. 1**

EP 0 437 234 B1

# Fig. 2

EP 0 437 234 B1

nth Field           n+5th Field

V sync signal a

Count-up signal b

Q output d

# Fig. 3

**Fig. 4**

**Fig. 5**

**Fig. 6**

EP 0 437 234 B1

| 1 | 9 | 17 | 25 | 33 | 41 |
|---|---|----|----|----|----|

1A  5A  9A  13A  17A  21A

# Fig. 7

**Line number**

| 1 | 2 | ... | 312 | 313 | 1 | 2 | ... | 312 | 313 |
|---|---|-----|-----|-----|---|---|-----|-----|-----|

A                          A

# Fig. 8